# EUROPÄISCHE PATENTSCHRIFT

(11) **EP 0 389 662 B1**
(45) Veröffentlichungstag und Bekanntmachung des Hinweises auf die Patenterteilung: **03.11.1993**
(21) Anmeldenummer: 89105713.5
(22) Anmeldetag: 31.03.1989
(51) Int. Cl.: H04J 3/06

(54) **Verfahren zum Synchronisieren der Phase von Taktsignalen zweier Taktgeneratoren in Kommunikationsnetzen**
Method for the phase synchronization of the signals of two clock generators in communication networks
Procédé de réglage de la phase des signaux de deux générateurs d'horloge dans les réseaux de télécommunications

(43) Veröffentlichungstag der Anmeldung: 03.10.1990
(73) Patentinhaber: SIEMENS AKTIENGESELLSCHAFT, 80333 München (DE)
(72) Erfinder: Zwack, Eduard, Dipl.-Ing., D-8039 Puchheim (DE)

(56) Entgegenhaltungen:
- EP-A- 0 014 945
- EP-A- 0 139 126
- EP-A- 0 274 606
- PROCEEDINGS INTERNATIONAL SYMPOSIUM ON CIRCUITS AND SYSTEMS, Tokyo, Japan, 17.-19. Juli 1979, Teil 2, Seiten 804-805, IEEE, New York, US; M. MAKINO et al.: "A microprocessor-controlled phase-locked loop for network synchronization"

## Beschreibung

In einzelnen Komponenten von digitalen Kommunikationsnetzen, wie beispielsweise Vermittlungs- oder Übertragungseinrichtungen, sind für die zeitgerechte Vermittlung und Übertragung der digitalen Informationen Taktgeneratoreinrichtungen vorgesehen. In diesen Taktgeneratoreinrichtungen werden die für die zeitgerechte Steuerung der jeweiligen Einrichtung erforderlichen Taktsignale erzeugt.

Bei plesiochronem Betrieb des Kommunikationsnetzes müssen in den einzelnen Taktgeneratoreinrichtungen sehr bitratengenaue und langzeitstabile Taktsignale gebildet werden. Diese Betriebsart erfordert zwar einen sehr hohen Aufwand je Taktgeneratoreinrichtung, läßt andererseits jedoch einen sehr flexiblen und weiträumigen Netzaufbau zu.

In synchron betriebenen Kommunikationsnetzen ist zentral eine hochgenaue, ausfallgesicherte Taktgeneratoreinrichtung installiert. Die in dieser Taktgeneratoreinrichtung erzeugten Taktsignale werden über übertragungstechnische Einrichtungen zusammen mit den digitalen Informationen, beispielsweise Sprachinformationen, an alle Komponenten des Kommunikationsnetzes verteilt. Mit Hilfe von mit Phasenregelkreisen - Phase-Locked Loop - ausgestatteten Taktgeneratoreinrichtungen werden in den Komponenten jeweils Taktsignale generiert, deren Phasen mit den Phasen der ankommenden hochgenauen Taktsignale übereinstimmen. Eine derartige Taktgeneratoreinrichtung mit Phasenregelkreis ist aus der Druckschrift 'Proceedings of 1979 ISCAS', Seiten 804, 805, "A mikroprocessor-controlled phase-locked loop for network synchronisation", bekannt. Durch diese Taktgeneratoreinrichtungen wird in den einzelnen Netzkomponenten eine zeitgerechte Verarbeitung der digitalen Informationen gewährleistet. Gegenüber plesiochronem Betrieb eines Kommunikationsnetzes ist bei Synchronbetrieb der Aufwand je Taktgeneratoreinrichtung hinsichtlich Taktgenauigkeit und insbesondere Langzeitstabilität geringer, jedoch ist dies mit einer aufwendigeren Übertragungstechnik und einem räumlich begrenzten Netzaufbau verbunden.

Sowohl bei plesiochronem Betrieb als auch bei Synchronbetrieb eines Kommunikationsnetzes sind in den Netzknoten, insbesondere digitalen Vermittlungseinrichtungen, ausfallgesicherte Taktgeneratoreinrichtungen vorgesehen. Hierzu werden zwei gleichartig realisierte - d. h. mit Phasenregelkreisen ausgestattete - Taktgeneratoreinrichtungen angeordnet, wobei die Taktsignale der ersten Taktgeneratoreinrichtung - im weiteren mit Referenztaktgeneratoreinrichtung bezeichnet - auf die ankommenden hochgenauen Taktsignale und die Taktsignale der zweiten Taktgeneratoreinrichtung - im weiteren mit Taktgeneratoreinrichtung bezeichnet - auf die von der Referenztaktgeneratoreinrichtung gebildeten Referenztaktsignale synchronisiert werden. Bei Ausfall der Referenztaktgeneratoreinrichtung wird meist automatisch auf die Taktgeneratoreinrichtung umgeschaltet. Da die beiden Taktgeneratoreinrichtungen beispielsweise in einer Vermittlungseinrichtung oftmals in einiger Entfernung - z. B. in unterschiedlichen Gestellrahmen - angeordnet sind, weichen in Kommunikationsnetzen mit hohen Verarbeitungsgeschwindigkeiten - Taktsignale mit hohen Bitraten - die Phasenlagen der in beiden Taktgeneratoreinrichtungen erzeugten Taktsignale aufgrund der Signallaufzeiten über die Verbindungen zwischen den Taktgeneratoren voneinander ab. Diese Phasenabweichungen verursachen bei Ausfall der Referenztaktgeneratoreinrichtung nach dem Umschalten auf die Taktgeneratoreinrichtung erhebliche Störungen insbesondere bei digitaler Informationsvermittlung und -übermittlung. Dies kann insbesondere bei der digitalen Datenübermittlung zu Übermittlungsverzögerungen und gegebenenfalls zu Verbindungsabbrüchen führen.

Die der Erfindung zugrundeliegende Aufgabe besteht in der Ausgestaltung eines Verfahrens, mit dessen Hilfe unabhängig von der Entfernung zweier Taktgeneratoreinrichtungen diese derart gesteuert werden, daß die Phasen der jeweils in den Taktgeneratoreinrichtungen erzeugten Taktsignale übereinstimmen. Die Aufgabe wird durch die Merkmale des Anspruchs 1 gelöst.

Der Kerngedanke der Erfindung ist darin zu sehen, daß zusätzlich zu einem in der Taktgeneratoreinrichtung für das Synchronisieren der Taktsignale auf die Referenztaktsignale angeordneten Phasenregelkreis auch in der Referenztaktgeneratoreinrichtung ein Phasenregelkreis vorgesehen ist, mit dessen Hilfe zumindest eine in zumindest eine Verbindungsleitung eingefügte Verzögerungseinrichtung derart eingestellt wird, bis eine eine n-fache Periodendauer der Referenzoszillatortaktsignale entsprechende Phasenabweichung erreicht wird. Diese Einstellgröße der Verzögerungsleitung, die die Phasenabweichung innerhalb des n-ten Oszillatortaktsignals angibt und die Phasenabweichung in n Periodendauern von Oszillatortaktsignalen, bilden zusammen eine Korrekturinformation, die an die Taktgeneratoreinrichtung übermittelt wird. In der Taktgeneratoreinrichtung werden die Phasen der Taktoszillatorsignale entsprechend den in den Korrekturinformationen angegebenen Phasenabweichungen korrigiert.

Ein wesentlicher Vorteil des erfindungsgemäßen Verfahrens ist in dem Einbeziehen des Verfahrens zum Synchronisieren von Taktsignalen mit Hilfe eines Phasenregelkreises in beide Taktgeneratoreinrichtungen zu sehen. Hierdurch können bewährte Schaltungsrealisierungen und bei Einsatz eines Mikroprozessors bewährte Programmrealisierungen in die erfindungsgemäße Realisierung mit einbezogen werden.

Das erfindungsgemäße Verfahren wird besonders vorteilhaft in einer digitalen Fernmeldevermittlung eingesetzt. Hierbei können Taktgeneratoreinrichtungen örtlich voneinander getrennt, z. B. in verschiedenen Gestellrahmen, untergebracht werden. Hierdurch ist ein flexibler, modularer mechanischer Aufbau von digitalen Fernmeldevermittlungsanlagen möglich.

Gemäß einer weiteren vorteilhaften Ausgestaltung des erfindungsgemäßen Verfahrens nach Anspruch 2 werden die Korrekturinformationen durch Pulsdauer- oder Pulspausenmodulation der Referenztaktsignale übermittelt. Dies bedeutet, daß die gemessenen Phasenabweichungen zwischen den Taktsignalen der beiden Taktgeneratoreinrichtungen durch die Pulsdauer oder Pulspause der Referenztaktsignale angegeben wird. Durch eine Pulsdauer- oder Pulspausenmessung der an die Taktgeneratoreinrichtung übermittelten Referenztaktsignale wird die Phasenabweichung in dieser ermittelt und die Phase der Taktsignale entsprechend geregelt. Durch diese besonders vorteilhafte Pulsdauer- oder Pulspausenmodulation der Referenztaktsignale können diese zusammen mit den Korrekturinformationen über eine einzige Verbindung von der Referenztaktgenerator- zur Taktgeneratoreinrichtung übermittelt werden.

Die Korrekturinformationen können alternativ jeweils durch 'm'-codierte pulsdauer- oder pulspausenmodulierte Referenztaktsignale übermittelt werden - siehe Anspruch 3. Diese Maßnahme ist dann besonders vorteilhaft, wenn die Pulsdauer- oder Pulspausenmodulationsstufen nicht ausreichen, die erforderlichen Phasenabweichungswerte darzustellen. Es werden also bestimmte Pulsdauern oder Pulspausen vorgegebenen logischen Werten - z. B. logisch "1" oder "0" - zugeordnet. Entsprechend dem gewählten Code - z. B. zehnstelliger Binärcode - werden entsprechend der aktuell vorliegenden Phasenabweichung zehn Referenztaktsignale codiert und an die Taktgeneratoreinrichtung übermittelt. In der Taktgeneratoreinrichtung werden diese zehn Referenztaktsignale empfangen und entsprechend der gewählten Codierung decodiert. Die decodierten Informationen stellen dann die in der Referenztakteinrichtung gemessene Phasenabweichung der beiden Taktsignale dar.

Gemäß einer weiteren vorteilhaften Ausgestaltung des erfindungsgemäßen Verfahrens werden in der Referenztakteinrichtung mit Hilfe eines zusätzlichen Referenzphasenregelkreises die Referenzoszillatortaktsignale hinsichtlich ihrer Phase bzw. Frequenz mit an die Referenztaktgeneratoreinrichtung herangeführten Netztaktsignalen synchronisiert - siehe Anspruch 4. Dieses Synchronisieren der Referenztaktsignale auf die Netztaktsignale ist für Referenztaktgeneratoreinrichtungen in synchron betriebenen Kommunikationsnetzen vorgesehen, wobei die Netztaktsignale von einer übergeordneten zentralen, hochpräzisen Takteinrichtung durch geeignete Übertragungstechnik - z. B. PCM-Übertragungstechnik - an die Referenztaktgeneratoreinrichtungen der Netzkomponenten, z. B. Fernmeldevermittlungen, verteilt werden.

Bei Einsatz der bereits erläuterten Phasenregelkreise in den beiden Taktgeneratoreinrichtungen ist für den Phasenregelkreis in der Taktgeneratoreinrichtung gegenüber dem in der Referenztaktgeneratoreinrichtung eine höhere Regelgeschwindigkeit - siehe Anspruch 5 - und für den Phasenregelkreis in der Referenztaktgeneratoreinrichtung gegenüber dem Referenzphasenregelkreis eine höhere Regelgeschwindigkeit - siehe Anspruch 6 - vorzusehen. Diese Regelgeschwindigkeitsverhältnisse der Phasenregelkreise sind besonders vorteilhaft, da hierdurch Instabilitäten, insbesondere Schwingneigungen, vermieden werden.

Um den Aufwand für die Anpassung der Frequenz der Taktsignale an die Regelgeschwindigkeit der Phasenregelkreise möglichst gering zu halten, ist es besonders vorteilhaft, die Frequenz der Taktsignale auf die Regelgeschwindigkeit der Phasenregelkreise abzustimmen - siehe Anspruch 7. Hierdurch kann auf zusätzliche Frequenzteiler bzw. Frequenzvervielfacheinrichtungen verzichtet werden.

Nach einer weiteren vorteilhaften Weiterbildung des erfindungsgemäßen Verfahrens nach Anspruch 8 sind die Referenztakt- und Taktsignale hinsichtlich ihrer Frequenz auf einen für eine PCM-gerechte Verarbeitung bzw. Übermittlung von Informationen vorgesehenen und standardisierten Rahmen- bzw. Synchronisiertakt abgestimmt. Die jeweils von den Oszillatortaktsignalen abgeleiteten Taktsignale stellen hierbei die Rahmentaktinformation, z. B. einen 32 Kanal-Rahmentakt eines PCM-Verarbeitungstaktes mit 2 MBit/s, dar. Dies bedeutet, daß zusätzlicher Aufwand für die Anpassung der Frequenz der Taktsignale an die Frequenz des PCM-Rahmentaktes oder deren Ableitung aus den Oszillatortaktsignalen vermieden wird.

Nach einer vorteilhaften Weiterbildung der Erfindung - siehe Ansprüche 9 bis 14 - ist die Anordnung zum Durchführen des Verfahrens sowohl als Referenztaktgeneratoreinrichtung als auch als Taktgeneratoreinrichtung einsetzbar - siehe insbesondere Anspruch 9 und 10. Dies wird teilweise dadurch erreicht, daß in der ersten und zweiten Pulsdauermodulations- sowie in der Phasenmeßeinrichtung Speichereinrichtungen vorgesehen sind, in denen von der Steuereinrichtung übermittelte Einstellinformationen oder Meßergebnisinformationen gespeichert werden und mit deren Hilfe Teile der erfindungsgemäßen Anordnung unwirksam gesteuert werden können. Beispielsweise kann durch eine in einer Speichereinrichtung gespeicherte Information die Verzögerungseinrichtung mit einer Laufzeit von 0 ms eingestellt und damit unwirksam gesteuert werden. Ein weiterer wesentlicher Vorteil der erfindungsgemäßen Anordnung ist darin zu sehen, daß mit Hilfe einer Zähleinrichtung die vom Taktoszillator gebildeten Oszillatortaktsignale kontinuierlich gezählt werden und die an den Zähleinrichtungsausgängen parallel vorliegenden Zählergebnisse zu bestimmten Zeitpunkten sowohl in der ersten und zweiten Pulsdauermodulationseinrichtung zum Bilden der pulsdauermodulierten Taktsignale als auch in der Phasenmeßeinrichtung herangezogen werden. Durch die Mehrfachnutzung der Zähleinrichtung kann Schaltungstechnik eingespart werden. Des weiteren liegen die Zählergebnisse in digitaler Form - beispielsweise als binär codierte digitale Signale - vor. Die Zählergebnisse sind daher für eine weitere digitale Verarbeitung - in Hardware- und Software-Komponenten - besonders geeignet.

Die Verzögerungseinrichtung ist gemäß einer weiteren vorteilhaften Ausgestaltung der erfindungsgemäßen Anordnung in einer der beiden oder symmetrisch verteilt in beide Verbindungsleitungen in der Referenztaktgenerator- und/oder der Taktgeneratoreinrichtung eingefügt - siehe Anspruch 11. Durch die symmetrische Aufteilung kann durch Einsatz mehrerer kleinerer, gleichartig aufgebauter Verzögerungseinrichtungen derselbe Verzögerungszeit-Regelbereich erreicht werden, wie durch eine einzige umfangreiche Verzögerungseinrichtung. Die Verzögerungszeiten werden hierbei von den Regeleinrichtungen direkt oder durch eine Informationsübermittlung - beispielsweise wiederum gemäß Anspruch 2 oder 3 an die Taktgeneratoreinrichtung - ermittelt und über eine hierfür vorgesehene Speichereinrichtung eingestellt.

Besonders vorteilhaft wird eine in der Laufzeit beeinflußbare Verzögerungseinrichtung durch seriell schaltbare Gatter integrierter Schaltkreise realisiert - siehe Anspruch 12. Die Anzahl der jeweils seriell zu schaltenden Gatter, die jeweils eine bekannte Lautzeit bzw. Verzögerungszeit aufweisen, wird hierbei durch die Regeleinrichtung über eine Speichereinrichtung gesteuert. Durch diese Maßnahme kann beispielsweise durch Bilden einer binär codierten Information eine der binären Information entsprechende Anzahl von Gattern seriell geschaltet werden.

Durch die besonders vorteilhafte Anordnung von zwei Verzögerungseinrichtungen, einer Kippstufe und drei Speichereinrichtungen - siehe Anspruch 13 - können einerseits durch die Steuereinrichtung die Laufzeiten der ersten Verzögerungseinrichtung eingestellt werden und andererseits die Phasenmeßergebnisse - liegen in n Periodendauern von Oszillatortaktsignalen und in Anzahl von Teilen einer Periodendauer eines Oszillatortaktsignals vor - an die Steuereinrichtung übermittelt werden. Die zweite Verzögerungseinrichtung kann wiederum durch seriell geschaltete Gatter gebildet werden, wobei die Ausgänge der Gatter jeweils mit den Eingängen einer Steuereinrichtung verbunden sind.

Gemäß einer weiteren vorteilhaften Ausgestaltung der erfindungsgemäßen Anordnung nach Anspruch 14 ist in der zweiten Pulsdauermodulationseinrichtung eine Positiv- und eine Negativ-Vergleichereinrichtung angeordnet, deren jeweils erste Vergleichereingänge mit jeweils einer Speichereinrichtung und deren zweite Vergleichereingänge mit den Ausgängen der Zähleinrichtung verbunden sind und der Ausgang der Negativ-Vergleichereinrichtung mit dem Setzeingang einer die pulsdauermodulierten Taktsignale bildenden zweiten Kippstufe und der Ausgang der Positiv-Vergleichereinrichtung auf einen Rücksetzeingang der zweiten Kippstufe geführt ist. Durch dieses Anordnen der Vergleicher- und Speichereinrichtungen sowie der zweiten Kippstufe können die Polaritätswechsel der zu bildenden pulsdauermodulierten Taktsignale hinsichtlich ihres zeitlichen Auftretens beliebig variiert werden. Dies bedeutet, daß die Taktsignale zu beliebigen Zeitpunkten ausgesandt werden können, d. h. in ihrer Phasenlage beliebig variierbar sind, und die Pulsdauern der Taktsignale, die die Korrekturinformationen repräsentieren, beliebig einstellbar sind.

Eine weitere vorteilhafte Ausgestaltung der Erfindung ist darin zu sehen, die Verzögerungseinrichtungen durch eine Laufzeitkette zu bilden, deren einzelne Laufzeitglieder durch n- und p-Kanal-Feldeffektransistoren und daraus gebildeten Invertern realisiert sind - siehe Anspruch 15. Eine derart gebildete Laufzeitkette ist aus der am 20.07.1988 veröfffentlichten europäischen Patentanmeldung 0274606 bekannt. Die Laufzeit der Signale durch die Laufzeitkette wird durch Anlegen einer Gleichspannung oder geglätteten pulsdauermodulierten Signale an die untereinander verbundenen Gate-Anschlüsse der Laufzeitkette variiert. Wird in dem integrierten Schaltkreis zusätzlich zue Laufzeitkette noch ein Phasenvergleichsglied implementiert - siehe Anpruch 16 -, so können in der Referenztaktgeneratoreinrichtung die erzeugten Referenztaktsignale mit den ankommenden Taktsignalen synchronisiert und gleichzeitig die Phasenabweichungen bestimmt werden. Hierbei repräsentiert der Pegel der am Ausgang des Phasenvergleichsgliedes vorliegenden, geglätteten pulsdauermodulierten Signale die aktuelle Phasenabweichung der beiden Taktsignale. Der Pegelwert muß anschließend für eine Weiterberarbeitung in der Steuereinrichtung in eine digitale Information umgesetzt werden. Diese Umsetzung kann beispielsweise durch handelsübliche Analog-Digital-Umsetzeinrichtungen bewerkstelligt werden. Das zusätzliche Anordnen des Phasenvergleichsgliedes in der integrierten Schaltung ist ebenfalls aus der europäischen Patentanmeldung 0274606 bekannt.

Im folgenden wird ein Ausführungsbeispiel des erfindungsgemäßen Verfahrens bzw. der erfindungsgemäßen Anordnung anhand zweier Blockschaltbilder und zweier Ablaufdiagramme näher erläutert.

Dabei zeigen
- Fig. 1: ein Blockschaltbild einer aus einer Referenztaktgenerator- und einer Taktgeneratoreinrichtung gebildeten ausfallgesicherten Takteinrichtung,
- Fig. 2: ein Blockschaltbild einer Referenztaktgenerator- bzw. Taktgeneratoreinrichtung,
- Fig. 3: ein Ablaufdiagramm zur Erläuterung einer Referenztaktgeneratoreinrichtung nach Fig. 1 und Fig. 2, und
- Fig. 4: ein Ablaufdiagramm zur Erläuterung einer Taktgeneratoreinrichtung nach Fig. 1 und Fig. 2.

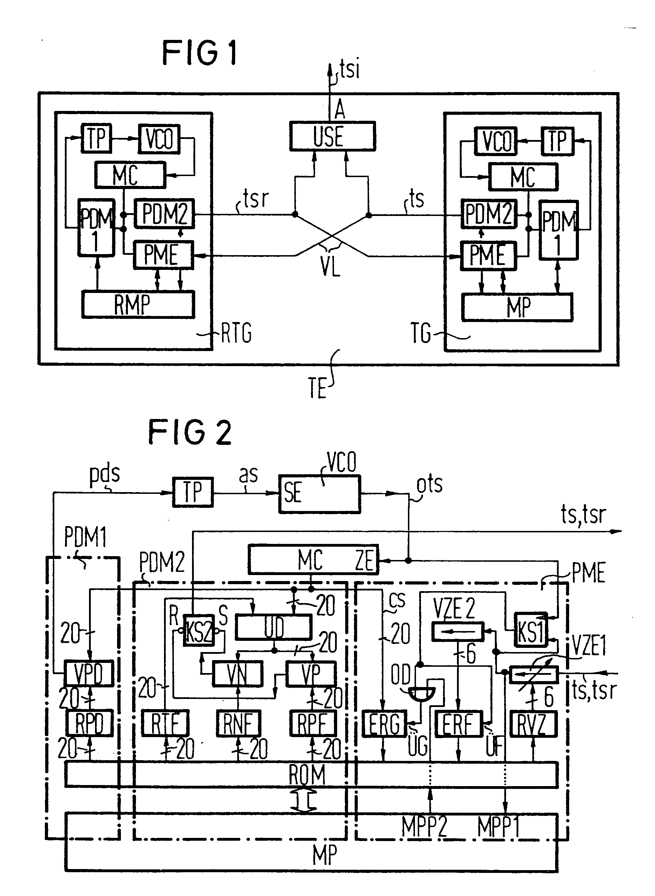

Fig. 1 zeigt eine ausfallgesicherte Takteinrichtung TE, die aus einer Referenztaktgenerator- und einer Taktgeneratoreinrichtung RTG, TG gebildet ist. Die Takteinrichtung TE ist beispielsweise in einer Vermittlungseinrichtung eines Kommunikationsnetzes angeordnet. Hierbei werden in der Takteinrichtung TE die für eine zeitgerechte Vermittlung der an der Vermittlungseinrichtung ankommenden Informationen erforderlichen Taktsignale tsi erzeugt. Die so gebildeten Taktsignale tsi werden an alle Komponenten des Vermittlungssystems verteilt und dort beispielsweise mit den Verarbeitungstaktsignalen synchronisiert.

Die Takteinrichtung TE ist aus zwei gleichartig realisierten Taktgeneratoreinrichtungen RTG, TG aufgebaut. In beiden Taktgeneratoreinrichtungen RTG, TG werden Taktsignale tsr, ts gebildet und an eine Umschalteinrichtung USE geführt. Mit Hilfe dieser Umschalteinrichtung USE wird bei Ausfall einer Taktgeneratoreinrichtung RTG, TG bzw. der Taktsignale tsr, ts auf die jeweils andere Taktgeneratoreinrichtung RTG, TG bzw. Taktsignale tsr, ts umgeschaltet. Am Ausgang A der Umschalteinrichtung USE liegen die ausfallgesicherten Taktsignale tsi vor und werden beispielsweise an die Systemkomponenten einer Vermittlungseinrichtung geleitet.

In einer der beiden Taktgeneratoreinrichtungen RTG, TG - im weiteren mit Referenztaktgeneratoreinrichtung RTG bezeichnet - werden Referenztaktsignale tsr gebildet und an die andere Taktgeneratoreinrichtung TG übermittelt. In dieser Taktgeneratoreinrichtung TG werden die gebildeten Taktsignale ts mit den ankommenden Referenztaktsignalen tsr hinsichtlich ihrer Phasenlage synchronisiert und an die Referenztaktgeneratoreinrichtung übermittelt.

Die Referenztaktgenerator- bzw. Taktgeneratoreinrichtung RTG, TG ist durch jeweils eine gleichartig realisierte gleichspannungsgesteuerte Oszillatortakteinrichtung VCO, eine Zähleinrichtung MC, eine erste und zweite Pulsdauermodulationseinrichtung PDM1, PDM2, eine Phasenmeßeinrichtung PME und durch eine Steuereinrichtung RMP, MP gebildet.

Fig. 2 zeigt ein Blockschaltbild einer Referenztaktgenerator- bzw. Taktgeneratoreinrichtung RTG, TG, in denen die schaltungstechnischen Komponenten der ersten und zweiten Pulsdauermodulationseinrichtung PDM1, PDM2 und der Phasenmeßeinrichtung PME detailliert dargestellt sind. In einer zentralen Steuereinrichtung MP werden die von den einzelnen Einrichtungen PDM1, PDM2, PME übermittelten Meß- bzw. Ergebnisinformationen bewertet und verarbeitet und ermittelte Einstellinformationen an die entprechenden Einrichtungen PDM1, PDM2, PME geführt. Die zentrale Steuereinrichtung MP ist beispielsweise durch einen 8-Bit-Mikroprozessor SAB 8051 der Firma Siemens realisiert. Die Einstell-, Meß- und Ergebnisinformationen werden zwischen der zentralen Steuereinrichtung MP und den Einrichtungen PDM1, PDM2, PME über eine Zwischenspeichereinrichtung ROM ausgetauscht. Diese Zwischenspeichereinrichtung ROM ist durch handelsübliche ROM (Read Only Memory)-Speicherbausteine realisiert. Der Zugriff der zentralen Steuereinrichtung MP auf die Zwischenspeichereinrichtung ROM im Sinne des Lesens und Speicherns von Informationen erfolgt durch in der Steuereinrichtung MP implementierte standardisierte Verfahren. Von dieser Zwischenspeichereinrichtung ROM gelangen die Einstellinformationen an in den Einrichtungen PDM1, PDM2, PME angeordnete Speichereinrichtungen RPD, RTF, RNF, RPF, RVZ bzw. werden die Meß- und Ergebnisinformationen von in den Einrichtungen PDM1, PDM2, PME angeordneten Speichereinrichtungen ERG, ERF an diese übermittelt.

Neben den bereits erläuterten Komponenten sind in der Taktgeneratoreinrichtung TG eine spannungsgesteuerte Oszillatoreinrichtung VCO, eine Zähleinrichtung MC und eine Tiefpaßeinrichtung TP angeordnet. Die Oszillatoreinrichtung VCO besteht beispielsweise aus einer integrierten Quarzoszillatorschaltung sowie einer Ziehschaltung, mit der die Oszillatorfrequenz in vorgegebenen Grenzen regelbar ist. Da die Ziehschaltung üblicherweise durch Kapazitätsdioden realisiert ist, wird eine Frequenzänderung durch Variieren einer an einen Spannungseingang SE der Oszillatoreinrichtung VCO angelegten Gleichspannung erreicht. Diese Gleichspannung bzw. Ansteuerspannung as wird in der Tiefpaßeinrichtung TP mit den dort ankommenden pulsdauermodulierten Signalen pds gebildet. Die Tiefpaßeinrichtung TP ist beispielsweise durch einen aus einem Widerstand und einem Kondensator geschalteten Tiefpaß realisiert. Die pulsdauermodulierten Signale pds werden in einer ersten Pulsdauermodulationseinrichtung PDM1 erzeugt. Die in der Oszillatoreinrichtung VCO erzeugten Oszillatortaktsignale ots werden an einen Zähleingang ZE der Zähleinrichtung MC geführt. In der Zähleinrichtung MC werden die übermittelten Oszillatortaktsignale ots beispielsweise durch einen 20 Bit-Synchronzähler kontinuierlich binär gezählt und die binär codierten Zählergebnisse cs jeweils an beispielsweise 20 parallel angeordneten Zählerausgängen bereitgestellt. Diese an den Ausgängen der Zähleinrichtung MC vorliegenden Zählergebnisse cs stellen die Zeitbasis einer Taktgeneratoreinrichtung TG dar und werden an die erste und zweite Pulsdauermodulationseinrichtung PDM1, PDM2 und an die Phasenmeßeinrichtung PME geführt.

In der ersten Pulsdauermodulationseinrichtung PDM1 werden die Zählergebnisse cs an erste 20 Eingänge eines Pulsdauer-Vergleichers VPD geleitet. Die zweiten 20 Eingänge des Pulsdauer-Vergleichers VPD sind mit einer Pulsdauer-Speichereinrichtung RPD verbunden. Im Pulsdauer-Vergleicher VPD werden durch kontinuierlichen Vergleich der an den beiden 20-Bit-Eingängen vorliegenden Informationen pulsdauermodulierte Signale pds gebildet und über einen Ausgang des Pulsdauer-Vergleicher VPD an die Tiefpaßeinrichtung TP geführt.

In der zweiten Pulsdauermodulationseinrichtung PDM2 werden die Zählergebnisse cs an 20 erste Eingänge eines 20-Bit-UND-Verknüpfungsgliedes UD geleitet. An 20 zweiten Eingängen des 20-Bit-UND-Verknüpfungsgliedes UD liegen die in einer Teiler-Speichereinrichtung RTF gespeicherten Informationen an. Mit Hilfe dieses UND-Verknüpfungsgliedes UD wird bestimmt, wie oft die Zählergebnisse cs an den Ausgang des UND-Verknüpfungsgliedes UD gegeben werden. Die Häufigkeit und damit die Frequenz der Weitergabe der Zählergebnisse wird durch die in der Teiler-Speichereinrichtung RTF gespeicherten Informationen bestimmt. Die 20 Ausgänge des UND-Verknüpfungsgliedes UD sind parallel auf jeweils 20 Eingänge eines Negativ-Vergleichers VN und eines Positiv-Vergleichers VP geführt. Die 20 zweiten Eingänge des Negativ-Vergleicher VN sind mit den 20 Ausgängen einer Negativ-Speichereinrichtung RNF verbunden. Analog hierzu sind die 20 zweiten Eingänge des Positiv-Vergleichers VP mit 20 Ausgängen einer Positiv-Speichereinrichtung RPF verbunden. Die in den beiden Speichereinrichtungen RNF, RPF zu speichernden Einstellinformationen werden von der Steuereinrichtung MP über die Zwischenspeichereinrichtung ROM an diese übermittelt. Durch kontinuierlichen Vergleich der jeweils an den 20 Eingängen vorliegenden Informationen wird im Positiv-Vergleicher VP ein Polaritätswechsel zur positiven Spannung hin und im Negativ-Vergleicher VN ein Polaritätswechsel zur negativen Spannung hin angezeigt und jeweils an den Ausgang des Vergleichers VN, VP übermittelt. Der Ausgang des Positiv-Vergleichers VP wird an einen Rücksetzeingang R und der Ausgang des Negativ-Vergleichers VN an einen Setzeingang S einer zweiten Kippstufe KS2 geführt. Diese zweite Kippstufe KS2 ist beispielsweise durch eine mit einem Setz- und Rücksetzeingang S, R versehene RS-Kippstufe einer integrierten Standard-Schaltkreistechnik realisiert. Mit einer die Polaritätswechsel anzeigenden Information wird an den Ausgang dieser zweiten Kippstufe KS2 positive bzw. negative Spannung angelegt. Der Ausgang dieser zweiten Kippstufe KS2 stellt den Ausgang der zweiten Pulsdauermodulationseinrichtung PDM2 dar, an dem je nach Einsatz als Referenztaktgenerator-oder als Taktgeneratoreinrichtung RTG, TG entweder die Referenztaktsignale tsr oder die Taktsignale ts anliegen.

In der Phasenmeßeinrichtung PME werden die Zählergebnisse cs an 20 Eingänge einer Grobphasen-Speichereinrichtung ERG übermittelt. In dieser Grobphasen-Speichereinrichtung ERG werden die Phasenabweichungen in n Periodendauern - n darf nur ganzzahlige Werte annehmen - der Oszillatortaktsignale ots der ankommenden Taktsignale ts zu den internen Taktsignalen tsr gebildet, gespeichert und über die Zwischenspeichereinrichtung ROM an die Steuereinrichtung MP übermittelt. Zu welchen Zeitpunkten die Zählergebnisse cs in die Grobphasen-Speichereinrichtung ERG übernommen werden sollen, wird durch entsprechendes Anlegen einer Information - beispielsweise kurzzeitig positive Spannung - an einen Übernahmeeingang der Grobphasen-Speichereinrichtung ERG bestimmt. Diese den Übernahmezeitpunkt bestimmende Information wird in einer ersten Kippstufe KS1 gebildet und über dessen Ausgang und über ein ODER-Verknüpfungsglied OD an den Übernahmeeingang ÜG der Grobphasen-Speichereinrichtung ERG geführt. An einen Takteingang dieser ersten Kippstufe KS1 werden die in der Oszillatoreinrichtung VCO gebildeten Oszillatortaktsignale ots geleitet. An einen Eingang - beispielsweise D-Eingang - der ersten Kippstufe KS1 gelangen die über eine erste Verzögerungseinrichtung VZE1 übermittelten Referenztakt- bzw. Taktsignale ts, tsr. Der Ausgang dieser ersten Kippstufe KS1 ist zusätzlich auf den Übernahmeeingang ÜF einer zweiten Feinphasen-Speichereinrichtung ERF geführt. Die erste Verzögerungseinrichtung VZE1, VZE2 ist beispielsweise durch Serienschaltung von Gattern von integrierten Schaltkreisen der Standardserien realisierbar. Hierbei können kleinere Gruppen von seriell geschalteten Gattern derart gebildet werden, daß die Gatterzahl der einzelnen Gruppen den Binärwerten - beispielsweise mit Gruppen von ein, zwei, vier, acht Gattern, usw. - entsprechen. Durch Einfügen einer geeigneten Ansteuerlogik kann durch Anlegen einer n-stelligen binären Information - beispielsweise sechsstellig - eine beliebige Anzahl von Gattern seriell hintereinander geschaltet werden. Im Ausführungsbeispiel sei angenommen, daß eine sechsstellige Binärinformation in einer Verzögerungsspeichereinrichtung RV gespeichert wird und diese über sechs Verbindungen die erste Verzögerungseinrichtung VZE1 derart steuert, daß eine der Binärinformation entsprechende Anzahl von Gattern hintereinander geschaltet - maximal beispielsweise 64 - wird. Wie viele Gatter hintereinander zu schalten sind bzw. welche Informationen in der Verzögerungs-Speichereinrichtung RVZ gespeichert werden müssen, wird in der Steuereinrichtung MP ermittelt und über die Zwischenspeichereinrichtung ROM an die Verzögerungs-Speichereinrichtung RVZ übermittelt. Der Ausgang der ersten Verzögerungseinrichtung VZE1 ist zusätzlich an einen Eingang einer zweiten Verzögerungseinrichtung VZE2 und gleichzeitig an einen Eingang bzw. Port MPP1 der Steuereinrichtung MP geführt. Die von der ersten Verzögerungseinrichtung VZE1 übermittelten Taktsignale ts, tsr gelangen an den Eingang der als Laufzeitkette realisierten zweiten Verzögerungseinrichtung VZE2. Die Laufzeitkette ist wiederum durch seriell geschaltete Gatter von integrierten Schaltkreisen der Standardserien gebildet. Für das Ausführungsbeispiel sei angenommen, daß 20 Gatter seriell geschaltet sind und die Ausgänge der Gatter jeweils auf die Eingänge einer Feinphasen-Speichereinrichtung ERF parallel geführt sind. Durch Anlegen einer entsprechenden Information an den Übernahmeeingang ÜF der Feinphasen-Speichereinrichtung ERF wird der Zeitpunkt bestimmt, zu dem die an den 20 Eingängen der Feinphasen-Speichereinrichtung ERF anliegenden Informationen in diese übernommen werden. Das am Eingang der Laufzeitkette ankommende Taktsignal ts, tsr durchläuft diese, wobei durch jedes Gatter eine bestimmte zeitliche Verzögerung bewirkt wird. Gleichzeitig liegt das Taktsignal ts, tsr am D-Eingang der ersten Kippstufe KS1 an. Der nächste Polaritätswechsel der am Takteingang der ersten Kippstufe KS1 anliegenden Oszillatortaktsignale ots bewirkt, daß exakt zu diesem Zeitpunkt die an den Eingängen der Feinphasen-Speichereinrichtung ERF anliegenden Informationen übernommen werden. Die Anzahl der durchlaufenen Gatter des Polaritätswechsels des Taktsignals ts, tsr gibt die Phasenabweichung innerhalb einer Periodendauer eines Oszillatortaktsignals ots an. Wurde beispielsweise die Information zu dem Zeitpunkt in die Feinphasen-Speichereinrichtung ERF übernommen, zu dem der Polaritätswechsel des Taktsignals ts, tsr zehn Gatter durchlaufen hat, so beträgt die Phasenabweichung des ankommenden Taktsignals ts mit dem intern gebildeten Taktsignal ts zehn Gatterlaufzeiten. Bei einer Gatterlaufzeit beispielsweise von 5 ns beträgt die Phasenabweichung somit 50 ns. Die Anzahl der Gatter kann weiter erhöht werden, jedoch sind die Ausgänge der Gatter über entsprechende Codierlogiken - beispielsweise binäre Codierlogik - zu führen. Hierdurch wird erreicht, daß beispielsweise die Informationen von 64 Gatterausgängen über sechs binär codierte Leitungen binär codiert an die Feinphasen-Speichereinrichtung ERF übermittelt werden können. Um den Übernahmeeingang ÜG der Grobphasen-Speichereinrichtung ERG bei Auftreten eines die Pulsdauer anzeigenden Polaritätswechsels des Taktsignales ts, tsr auch von der Steuereinrichtung MP steuern zu können, ist ein Ausgang bzw. Port MPP2 der Steuereinrichtung MP mit dem zweiten Eingang des ODER-Verknüpfungsgliedes OD verbunden.

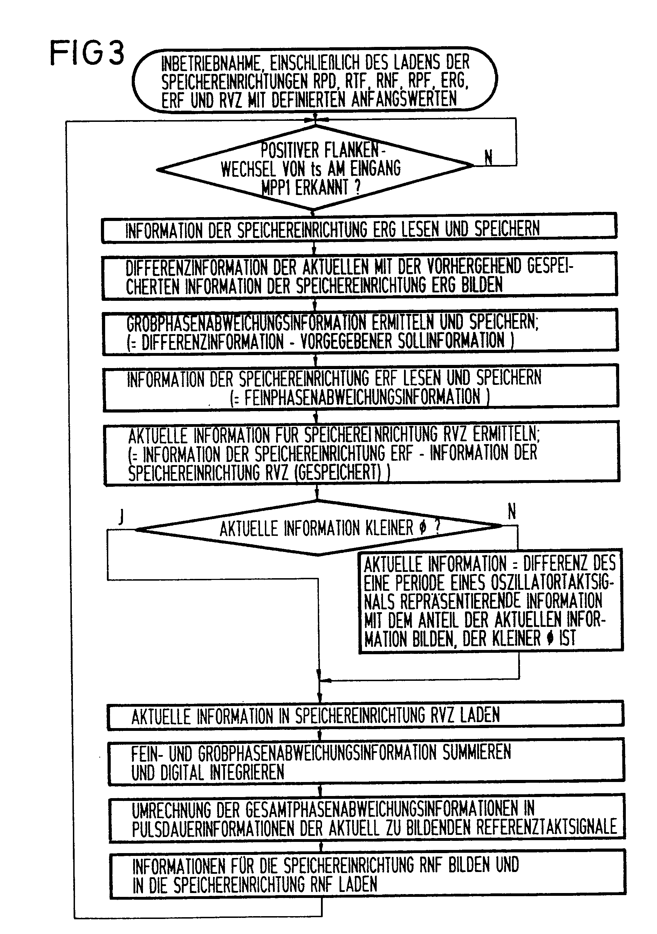

In Fig. 3 ist bei einer nach Fig. 1 gebildeten Takteinrichtung TE das Ablaufdiagramm der in der Referenz-Steuereinrichtung RMP implementierten Programme dargestellt bzw. ausführlich beschrieben. Für das Ausführungsbeispiel wurde vorausgesetzt, daß die in der Referenztaktgeneratoreinrichtung RTG erzeugten Taktsignale tsr nicht auf weitere von einer Netztakteinrichtung übermittelte Netztaktsignale synchronisiert werden müssen. Somit ist bei der Inbetriebnahme der Referenztaktgeneratoreinrichtung RTG eine definierte Information von der Referenz-Steuereinrichtung RMP über die Zwischenspeichereinrichtung ROM in die Pulsdauer-Speichereinrichtung RPD zu laden.

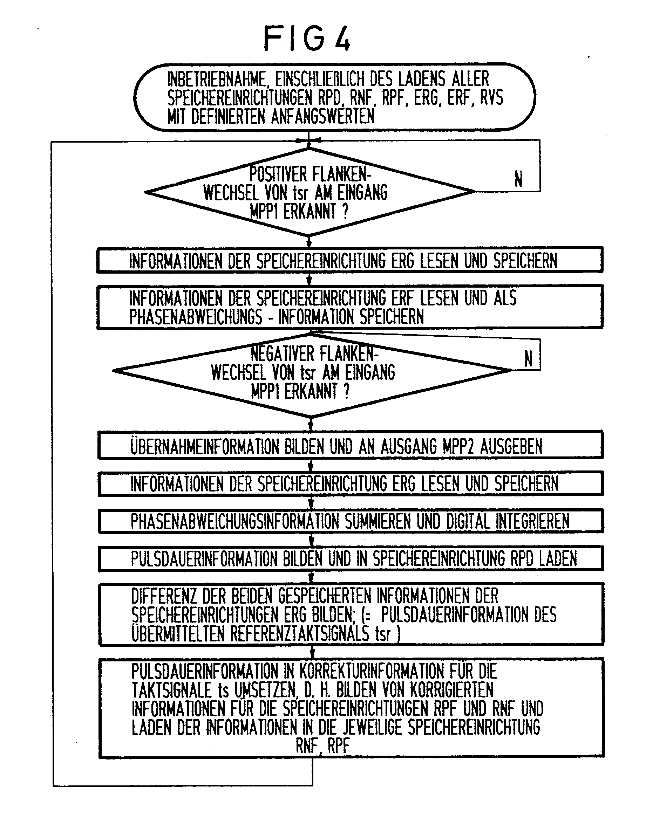

In Fig. 4 ist das Ablaufdiagramm der in der Steuereinrichtung MP der Taktgeneratoreinrichtung TG implementierten Programme dargestellt und ausführlich beschrieben. Die Taktgeneratoreinrichtung TG ist hierbei entsprechend der Fig. 1 in einer Takteinrichtung TE angeordnet.

Die einzelnen Komponenten der ersten und zweiten Pulsdauermodulationseinrichtung PDM1, PDM2, der Zähleinrichtung MC und der Phasenmeßeinrichtung PME sind - mit Ausnahme der Steuereinrichtung - aufgrund der auftretenden erhöhten Verarbeitungsgeschwindigkeiten durch übliche integrierte Schaltkreise - beispielsweise die Speichereinrichtungen durch handelsübliche Registerschaltkreise und andere Komponenten wie bereits erläutert - oder besonders vorteilhaft durch die integrierten Schaltkreise in ASIC (Application Specified Integrated Circuit)-Technik zu realisieren. Da zwischenzeitlich integrierte Schaltkreise in ASIC-Technik zur Verfügung stehen, in denen auch Mikroprozessorsysteme einbezogen sind, kann eine Referenztaktgenerator- bzw. Taktgeneratoreinrichtung RTG, TG vollständig in einem ASIC-Schaltkreis untergebracht werden.

## Patentansprüche

1. Verfahren zum Synchronisieren der Phase bzw. Frequenz von digitalen Oszillatortaktsignalen (ots), die in einer Oszillatortakteinrichtung (VCO) einer Taktgeneratoreinrichtung (TG) gebildet werden, mit
- digitalen Referenzoszillator-Taktsignalen (tor), die in einer Referenzoszillatortakteinrichtung (RVCO) einer Referenztaktgeneratoreinrichtung (RTG) gebildet werden,
- bei dem in der Referenztakt- bzw. in der Taktgeneratoreinrichtung (RTG, TG) von den Referenz- bzw. Oszillatortaktsignalen (tor, to) mit Hilfe jeweils einer Pulseinrichtung und einer Referenzprozessor- bzw. Prozessoreinrichtung (RMP, MP) eine niedrigere Frequenz aufweisende Referenztaktsignale bzw. Taktsignale (tsr, ts) abgeleitet werden, wobei definierte Signalflanken die Phasenlage der Referenzoszillator- bzw. Oszillator-Taktsignale (tor, to) repräsentieren,
- bei dem in der Taktgeneratoreinrichtung (TG) mit Hilfe eines durch eine Phasenmeß- und die Steuereinrichtung (MP) gebildeten Phasenregelkreises die Oszillator-Taktsignale (ots) hinsichtlich ihrer Phase bzw. Frequenz mit den an die Taktgeneratoreinrichtung (TG) übermittelten Referenztaktsignalen (tsr) synchronisiert werden,
- bei dem in der Referenztaktgeneratoreinrichtung (RTG) mit Hilfe eines aus einer Regel- und Verzögerungseinrichtung (VZE2) gebildeten Regelkreises in der aus einer Phasenmeßeinrichtung (PME) und der Steuereinrichtung (RMP) gebildeten Regeleinrichtung die Phasenabweichungen zwischen den Referenztaktsignalen (tsr) und den an die Referenztaktgeneratoreinrichtung (RTG) über eine Verbindungsleitung (VL) übermittelten Taktsignalen (ts) gemessen und Regelinformationen gebildet werden,
mit denen zumindest eine in der Laufzeit steuerbare weitere Verzögerungseinrichtung (VZE1), die in zumindest eine Verbindungsleitung (VL) zur Übermittlung der Referenztakt- bzw. Taktsignale (tsr, ts) eingefügt ist, derart gesteuert wird, daß die Phasenabweichungen zwischen den Referenztaktsignalen (tsr) und den Taktsignalen (ts) einer n-fachen Periodendauer der Referenzoszillator-Taktsignale (ots) entsprechen,
- bei dem in der Regeleinrichtung der Referenztaktgeneratoreinrichtung (RTG) eine in 'n' Periodendauern gemessene und eine innerhalb der n-ten Periodendauer gemessene Phasenabweichung zwischen den Taktsignalen (ts, tsr) repräsentierende Korrekturinformation (ki) gebildet und an die Taktgeneratoreinrichtung (TG) übermittelt wird,
- bei dem in der Taktgeneratoreinrichtung (TG) mit Hilfe der Steuereinrichtung (MP) gemäß den übermittelten Korrekturinformationen (ki) die Phasenlagen der Taktsignale (ts, tsr) korrigiert werden.

2. Verfahren nach Anspruch 1,
**dadurch gekennzeichnet,**
daß die Korrekturinformation (ki) durch Pulsdauer- oder Pulspausenmodulation der Referenztaktsignale (tsr) übermittelt wird.

3. Verfahren nach Anspruch 2,
**dadurch gekennzeichnet,**
daß die Korrekturinformation (ki) jeweils durch 'm' codierte pulsdauer- oder pulspausenmodulierte Referenztaktsignale (tsr) übermittelt wird.

4. Verfahren nach mindestens einem der vorhergehenden Ansprüche,
**dadurch gekennzeichnet,**
daß im Referenztaktgenerator (RTG) mit Hilfe eines zusätzlichen Referenzphasenregelkreises die Referenzoszillatortaktsignale (ots) hinsichtlich Phase bzw. Frequenz mit Netztaktsignalen synchronisiert werden.

5. Verfahren nach mindestens einem der vorhergehenden Ansprüche,
**dadurch gekennzeichnet,**
daß für den Phasenregelkreis im Taktgenerator (TG) gegenüber dem Regelkreis im Referenztaktgenerator (RTG) eine höhere Regelgeschwindigkeit vorgesehen ist.

6. Verfahren nach mindestens einem der vorhergehenden Ansprüche,
**dadurch gekennzeichnet,**
daß für den Regelkreis im Referenztaktgenerator (RTG) gegenüber dem Referenzphasenregelkreis eine höhere Regelgeschwindigkeit vorgesehen ist.

7. Verfahren nach mindestens einem der vorhergehenden Ansprüche,
**dadurch gekennzeichnet,**
daß die gegenüber den Referenz- bzw. Oszillatortaktsignalen (ots) eine niedrigere Frequenz aufweisenden Referenztakt- bzw. Taktsignale (tsr, ts) hinsichtlich ihrer Frequenz auf die Regelgeschwindigkeiten der Phasenregelkreise bzw. Regelkreise abgestimmt sind.

8. Verfahren nach mindestens einem der vorhergehenden Ansprüche,
**dadurch gekennzeichnet,**
daß die Referenztakt- bzw. Taktsignale (tsr, ts) hinsichtlich ihrer Frequenz auf einen für eine PCM-gerechte Verarbeitung bzw. Übermittlung von Informationen vorgesehenen und standardisierten Rahmen- bzw. Synchronisiertakt abgestimmt sind.

9. Anordnung zur Durchführung des Verfahrens nach mindestens einem der Ansprüche 1 bis 8,
**dadurch gekennzeichnet,**
daß in einer Taktgeneratoreinrichtung (TGE) der Ausgang einer die Oszillator-Taktsignale (ots) bildenden und in der Frequenz steuerbaren digitalen Oszillatortakteinrichtung (VCO) mit einem Takteingang einer Zählereinrichtung (MC) verbunden ist, daß die Zählerausgänge, an denen die in der Zählereinrichtung (MC) ermittelten Zählergebnisse vorliegen, mit einer ersten und zweiten Pulsdauermodulationseinrichtung (PDM1, PDM2) sowie mit einer Phasenmeßeinrichtung (PME) verbunden sind, daß der Ausgang der ersten Pulsdauermodulationseinrichtung (PDM1) über eine Tiefpaßeinrichtung (TP) mit einem Steuereingang der Oszillatortakteinrichtung (VCO) verbunden ist, daß die zweite Pulsdauermodulationseinrichtung (PDM2) einen die Taktsignale (ts) bereitstellenden Taktsignalausgang aufweist, daß die Phasenmeßeinrichtung (PME) mit einem Eingang für ankommende Taktsignale (ts) versehen ist und daß in der ersten und zweiten Pulsdauermodulationseinrichtung (PDM1, PDM2) und in der Phasenmeßeinrichtung (PME) jeweils die Einstellinformationen oder die ermittelten Informationen der Einrichtungen zwischenspeichernde Speichereinrichtungen (RPD, RTF, RNF, RPF, ERG, ERF, RVZ) vorgesehen sind, die über einen weiteren Zwischenspeicher (ROM) mit einer Steuereinrichtung (MP) verbunden sind.

10. Anordnung nach Anspruch 9,
**dadurch gekennzeichnet,**
daß der Ausgang der zweiten Pulsdauermodulationseinrichtung (PDM2) einer als Referenztaktgeneratoreinrichtung (RTG) definierten Taktgeneratoreinrichtung (TG) mit dem Eingang der Phasenmeßeinrichtung (PME) einer weiteren Taktgeneratoreinrichtung (TG) und der Ausgang der zweiten Pulsdauermodulationseinrichtung (PDM2) der weiteren Taktgeneratoreinrichtung (TG) mit dem Eingang der Phasenmeßeinrichtung (PME) der Referenztaktgeneratoreinrichtung (RTG) jeweils über eine Verbindungsleitung (VL) verbunden ist.

11. Anordnung nach mindestens einem der Ansprüche 9 bis 10,
**dadurch gekennzeichnet,**
daß eine in der Laufzeit beeinflußbare Verzögerungseinrichtung (VZ1) in eine der beiden oder symmetrisch verteilt in beide Verbindungsleitungen (VL) in der Referenztaktgenerator- und/oder der Taktgeneratoreinrichtung eingefügt ist.

12. Anordnung nach Anspruch 11,
**dadurch gekennzeichnet,**
daß die Verzögerungseinrichtung (VZ1) jeweils als eine durch mehrere seriell schaltbare Gatter integrierter Schaltkreise gebildete Verzögerungsleitung realisiert ist, wobei die Anzahl der jeweils seriell zu schaltenden Gatter durch die Steuereinrichtung gesteuert wird.

13. Anordnung nach mindestens einem der Ansprüche 9 bis 12,
**dadurch gekennzeichnet,**
daß in der Phasenmeßeinrichtung (PME) eine mit dessen Taktsignal-Eingang verbundene erste Verzögerungseinrichtung (VZ1) angeordnet ist, daß im Sinne einer Beeinflussung der Signallaufzeit der Verzögerungseinrichtung (VZ1) diese mit einer die Beeinflussungsinformation speichernden Zwischenspeichereinrichtung (RVZ) verbunden ist, daß der Ausgang der ersten Verzögerungseinrichtung (VZE1) mit dem Eingang einer zur Bestimmung der Phasenabweichung innerhalb der n-ten Periodendauer eines Oszillatortaktsignals (ots) zweiten Verzögerungseinrichtung (VZE2), mit einem Eingang einer ersten Kippstufe (KS1) und mit einem Eingang (MPP1) der Steuereinrichtung (MP) verbunden ist, daß der Takteingang der ersten Kippstufe (KS1) mit dem Ausgang der Oszillatortakteinrichtung (VCO) verbunden ist, daß der Ausgang der ersten Kippstufe (KS1) über ein Verknüpfungsglied (OD) mit einem Übernahmeeingang (ÜG) einer die Phasenabweichung in 'n' Oszillator-Taktsignal-Periodendauern zwischenspeichernde Grobphasen-Speichereinrichtung (ERG) und mit einem Übernahmeeingang (UF) einer die Phasenabweichung innerhalb der n-ten Oszillator-Taktsignal-Periodendauer zwischenspeichernde Feinphasen-Speichereinrichtung (ERF) verbunden ist, daß die Ausgänge der zweiten Verzögerungseinrichtung (VZE2) mit den Eingängen der Feinphasen-Speichereinrichtung (ERF) und die Eingänge der Grobphasen-Speichereinrichtung (ERG) mit den Zählausgängen verbunden sind und daß ein Ausgang (MPP2) der Steuereinrichtung (MP2) auf einen zweiten Eingang des Verknüpfungsgliedes (OD) geführt ist.

14. Anordnung nach mindestens einem der Ansprüche 9 bis 13,
**dadurch gekennzeichnet,**
daß in der zweiten Pulsdauermodulationseinrichtung (PDM2) ein Positiv- und ein Negativ-Vergleicher angeordnet ist, dessen jeweils erste Vergleichereingänge mit jeweils einer Speichereinrichtung (RNF, RPF) und deren zweite Vergleichereingänge mit den Ausgängen der Zählereinrichtung (MC) verbunden sind und daß der Ausgang des Negativ-Vergleichers (RNF) mit dem Setzeingang (S) einer die pulsdauermodulierten Taktsignale (ts) bildenden zweiten Kippstufe (KS2) und der Ausgang des Positiv-Vergleichers (VP) auf einen Rücksetzeingang (R) der zweiten Kippstufe (KS2) geführt ist.

15. Anordnung nach mindestens einem der Ansprüche 9 bis 14,
**dadurch gekennzeichnet,**
daß die Verzögerungseinrichtungen (VZ1, VZ2) durch eine aus mehreren hintereinander geschalteten Laufzeitgliedern bestehende Laufzeitkette gebildet ist, daß die Laufzeitglieder durch in der integrierten CMOS-Schaltungstechnik eingesetzte n-Kanal und p-Kanal-Anreicherungs-Feldeffekttransistoren und aus diesen gebildeten Invertern realisiert ist, daß der Eingang der Inverter jeweils mit einem Gate-Anschluß eines über deren Source-Anschluß mit negativer Versorgungsspannung verbundenen n-Kanal-Feldeffekttransistors und mit einem Gate-Anschluß eines über dessen Drain-Anschluß mit positiver Versorgungsspannung verbundenen p-Kanal-Feldeffekttransistors verbunden ist und deren Ausgang jeweils mit dem noch nicht beschalteten Drain- bzw. Source-Anschluß des jeweiligen Feldeffektransistors verbunden ist,
- daß jedes Laufzeitglied teilweise durch Hintereinanderschalten zweier Inverter gebildet und im Sinne seiner Laufzeitbeeinflussung
- - entweder zwischen den p-Kanal-Feldeffekttransistoren und der positiven Versorgungsspannung jeweils ein weiterer p-Kanal-Feldeffekttransistor derart eingefügt wird, daß der Source-Anschluß dieses p-Kanal-Feldeffektransistors mit dem Drain-Anschluß des p-Kanal-Feldeffektransistors der Inverter, die Drain-Anschlüsse mit der Versorgungsspannung verbunden sind,
- - oder zwischen die n-Kanal-Feldeffektransistoren und der negativen Versorgungsspannung jeweils ein n-Kanal-Feldeffekttransistor derart eingefügt wird, daß der Drain-Anschluß dieser n-Kanal-Feldeffekttransistoren jeweils mit dem Source-Anschluß des n-Kanal-Feldeffektransistors der Inverter, die Source-Anschlüsse mit der negativen Versorgungsspannung und die Gate-Anschlüsse sowohl untereinander in einem Laufzeitglied als auch mit allen Gate-Anschlüssen der jeweils anderen Laufzeitglieder verbunden sind,
daß die Laufzeitglieder in einer integrierten Schaltung realisiert sind und daß der Ein- und Ausgang der Laufzeitkette und die Verbindungen zwischen den Gliedern der Laufzeitkette jeweils mit einem für eine externe Beschaltung vorgesehenen Anschluß verbunden sind.

16. Anordnung nach Anspruch 15,
**dadurch gekennzeichnet,**
daß der Laufzeitkette ein Phasenvergleichsglied nachgeschaltet ist, daß das Phasenvergleichsglied teilweise durch zwei seriell angeordnete Inverter gebildet wird und im zweiten Inverterglied jeweils zwischen die Versorgungsspannung und den n- bzw. p-Kanal-Feldeffektransistoren zwei weitere n- bzw. p-Kanal-Feldeffektransistoren seriel in Drain-Source- bzw. Source-Drain-Richtung eingefügt sind, daß die Gate-Anschlüsse der jeweils dem n- bzw. p-Kanal-Feldeffekttransistor des zweiten Invertiergliedes folgenden Feldeffekttransistoren auf den Eingang des Inverters zurückgeführt werden und die Gate-Anschlüsse der jeweils mit der Versorgungsspannung verbundenen Feldeffekttransistoren untereinander und mit dem Ausgang der Laufzeitkette verbunden sind, daß zwischen den Ausgang des Phasenvergleichsgliedes darstellenden Ausgang des zweiten Invertiergliedes und die negative Versorgungsspannung ein Kondensator einfügbar ist und der Ausgang des Phasenvergleichsgliedes direkt mit allen untereinander verbundenen Gate-Anschlüssen der Laufzeitglieder und mit einem für eine extern Beschaltung vorgesehenen Anschluß verbunden ist.

## Claims

1. Method for synchronising the phase and/or frequency of digital oscillator clock signals (ots) which are formed in an oscillator clock equipment (VCO) of a clock generator equipment (TG),
- having digital reference oscillator clock signals (tor), which are formed in a reference oscillator clock equipment (RVCO) of a reference clock generator equipment (RTG),
- in which reference clock signals or clock signals (tsr, ts) having a lower frequency are derived in the reference clock equipment or in the clock generator equipment (RTG, TG) respectively from the reference oscillator clock signals or the oscillator clock signals (tor, to) respectively, respectively using a pulse equipment and a reference processor equipment or processor equipment (RMP, MP) respectively, defined signal edges representing the phase relation of the reference oscillator clock signals or the oscillator clock signals (tor, to) respectively,
- in which the oscillator clock signals (ots) are synchronised in phase and/or frequency with the reference clock signals (tsr) transmitted to the clock generator equipment (TG) in the clock generator equipment (TG) using a phase-locked loop which is formed by a phase-measuring equipment and the controller (MP),
- in which the phase deviations between the reference clock signals (tsr) and the clock signals (ts) which are transmitted to the reference clock generator equipment (RTG) via a connecting line (VL) are measured and control information items are formed in the reference clock generator equipment (RTG) using a control loop which is formed by a control and delay equipment (VZE2) in the control equipment formed by a phase-measuring equipment (PME) and the controller (RMP), at least one further delay equipment (VZE1), which is inserted into at least one connecting line (VL) for transmitting the reference clock signals or the clock signals (tsr, ts) respectively and the delay time of which can be controlled, being controlled by said control information items in such a way that the phase deviations between the reference clock signals (tsr) and the clock signals (ts) correspond to an n-fold period duration of the reference oscillator clock signals (ots),
- in which a correction information item (ki) which is measured in n period durations and represents a phase deviation between the clock signals (ts, tsr) which is measured within the nth period duration is formed in the control equipment of the reference clock generator equipment (RTG) and is transmitted to the clock generator equipment (TG),
- in which the phase relations of the clock signals (ts, tsr) are corrected in the clock generator equipment (TG) using the controller (MP) in accordance with the correction information items (ki) transmitted.

2. Method according to Claim 1, characterised in that the correction information item (ki) is transmitted by pulse duration modulation or pulse pause modulation of the reference clock signals (tsr).

3. Method according to Claim 2, characterised in that the correction information item (ki) is respectively transmitted by m coded pulse duration modulated or pulse pause modulated reference clock signals (tsr).

4. Method according to at least one of the preceding claims, characterised in that the reference oscillator clock signals (ots) are synchronised in phase and/or frequency with network clock signals in the reference clock generator (RTG) using an additional reference phase-locked loop.

5. Method according to at least one of the preceding claims, characterised in that a higher control rate is provided for the phase-locked loop in the clock generator (TG) than for the control loop in the reference clock generator (RTG).

6. Method according to at least one of the preceding claims, characterised in that a higher control rate is provided for the control loop in the reference clock generator (RTG) than for the reference phase-locked loop.

7. Method according to at least one of the preceding claims, characterised in that the reference clock signals or clock signals (tsr, ts) respectively having a lower frequency than the reference oscillator clock signals or oscillator clock signals (ots) respectively are tuned in frequency to the control rates of the phase-locked loops or control loops respectively.

8. Method according to at least one of the preceding claims, characterised in that the reference clock signals or clock signals (tsr, ts) respectively are tuned in frequency to a frame and/or synchronisation clock provided for PCM-compatible processing or transmission of information items.

9. Arrangement for implementing the method according to at least one of Claims 1 to 8, characterised in that in a clock generator equipment (TGE) the output of a digital oscillator clock equipment (VCO) which forms the oscillator clock signals (ots) and the frequency of which can be controlled is connected to a clock input of a counter (MC), that the counter outputs, at which the counting results determined in the counter (MC) are provided, are connected to a first and second pulse duration modulation equipment (PDM1, PDM2) and to a phase-measuring equipment (PME), that the output of the first pulse duration modulation equipment (PDM1) is connected via a lowpass equipment (TP) to a control input of the oscillator clock equipment (VCO), that the second pulse duration modulation equipment (PDM2) has a clock signal output which makes the clock signals (ts) available, that the phase-measuring equipment (PME) is provided with an input for incoming clock signals (ts) and that memory equipments (RPD, RTF, RNF, RPF, ERG, ERF, RVZ) which temporarily store the setting information items or the equipment information items which have been determined are provided in the first and second pulse duration modulation equipments (PDM1, PDM2) and in the phase-measuring equipment (PME) respectively, and are connected via a further intermediate memory (ROM) to a controller (MP).

10. Arrangement according to Claim 9, characterised in that the output of the second pulse duration modulation equipment (PDM2) of a clock generator equipment (TG) which is defined as a reference clock generator equipment (RTG) is connected to the input of the phase-measuring equipment (PME) of a further clock generator equipment (TG) and the output of the second pulse duration modulation equipment (PDM2) of the further clock generator equipment (TG) is connected to the input of the phase-measuring equipment (PME) of the reference clock generator equipment (RTG) via a connecting line (VL) in each case.

11. Arrangement according to at least one of Claims 9 to 10, characterised in that a delay device (VZ1) having a controllable delay time is inserted into one of the two connecting lines (VL) or is symmetrically distributed in both connecting lines (VL) in the reference clock generator equipment and/or the clock generator equipment.

12. Arrangement according to Claim 11, characterised in that the delay equipment (VZ1) is respectively a delay line formed by a plurality of series-connectable gates of integrated circuits, the number of gates to be series-connected in each case being controlled by the controller.

13. Arrangement according to at least one of Claims 9 to 12, characterised in that a first delay equipment (VZ1) which is connected to the clock signal input of the phase-measuring equipment (PME) is arranged in the latter, that the delay equipment (VZ1) is connected to an intermediate memory equipment (RVZ) storing the controlling information in order to control the signal delay time of the delay device (VZ1), that the output of the first delay device (VZE1) is connected to the input of a second delay device (VZE2) which is intended to determine the phase deviation within the nth period duration of an oscillator clock signal (ots), to an input of a first trigger unit (KS1) and to an input (MPP1) of the controller, that the clock input of the first trigger unit (KS1) is connected to the output of the oscillator clock equipment (VCO), that the output of the first trigger unit (KS1) is connected via a logic element (OD) to a transfer input (ÜG) of a coarse-phase memory equipment (ERG) which temporarily stores the phase deviation in n oscillator clock signal period durations and to a transfer input (UF) of a fine-phase memory equipment (ERF) which temporarily stores the phase deviation within the nth oscillator clock signal period duration, that the outputs of the second delay equipment (VZE2) are connected to the inputs of the fine-phase memory equipment (ERF) and the inputs of the coarse-phase memory equipment (ERG) are connected to the counter outputs and that an output (MPP2) of the controller (MP2) is guided to a second input of the logic element (OD).

14. Arrangement according to at least one of Claims 9 to 13, characterised in that a positive and a negative comparator are arranged in the second pulse duration modulation equipment (PDM2), respectively the first inputs of the said comparators being connected respectively to a memory equipment (RNF, RPF) and the second input of the said comparators being connected to the outputs of the counter (MC), and that the output of the negative comparator (RNF) is guided to the setting input (S) of a second trigger unit (KS2) which forms the pulse duration modulated clock signals (ts) and the output of the positive comparator (VP) is guided to a reset input (R) of the second trigger unit (KS2).

15. Arrangement according to at least one of Claims 9 to 14, characterised in that the delay equipments (VZ1, VZ2) are formed by a delay chain which comprises a plurality of delay elements connected in series, that the delay elements are n-channel and p-channel enhancement field effect transistors used in integrated CMOS circuit technology and inverters formed therefrom, that the input of the inverters is respectively connected to a gate terminal of an n-channel field effect transistor which is connected to a negative supply voltage via the source terminal of the said inverters and to a gate terminal of a p-channel field effect transistor which is connected to a positive supply voltage via the drain terminal of the said gate terminal and the output of the said inverters is respectively connected to the as yet unconnected drain terminal and/or source terminal of the respective field effect transistor,
- that each delay element is partly formed by the series connection of two inverters and, to control its delay time,
- - either a further p-channel field effect transistor is respectively inserted between the p-channel field effect transistors and the positive supply voltage in such a way that the source terminal of the said p-channel field effect transistor is connected to the drain channel of the p-channel field effect transistor of the inverters, and the drain terminals are connected to the supply voltage,
- - or an n-channel field effect transistor is respectively inserted between the n-channel field effect transistors and the negative supply voltage in such a way that the drain terminal of the said n-channel field effect transistors is respectively connected to the source terminal of the n-channel field effect transistor of the inverters, the source terminals are connected to the negative supply voltage and the gate terminals are connected both to one another in a delay element and to all the gate terminals of the other delay elements respectively,
that the delay elements take the form of an integrated circuit and that the input and output of the delay chain and the connections between the elements of the delay chain are respectively connected to a terminal provided for an external connection.

16. Arrangement according to Claim 15, characterised in that a phase comparison element is connected downstream of the delay chain, that the phase comparison element is partly formed by two series-connected inverters and two further n-channel field effect transistors and p-channel field effect transistors respectively are inserted in series in the drain-source and source-drain direction respectively in the second inverter element between the supply voltage and the n-channel field effect transistors and the p-channel field effect transistors respectively, that the gate terminals of the field effect transistors respectively following the n-channel field effect transistor or p-channel field effect transistor respectively of the second inverter element are returned to the inputs of the inverter and the gate terminals of the field effect transistors respectively connected to the supply voltage are connected to one another and to the output of the delay chain, that a capacitor can be inserted between the output of the second inverter element representing the output of the phase comparison element and the negative supply voltage and the output of the phase comparison element is directly connected to all gate terminals connected to one another of the delay elements and to a terminal provided for an external connection.

## Revendications

1. Procédé pour synchroniser la phase ou la fréquence de signaux numériques de cadence d'un oscillateur (ots), qui sont formés dans un oscillateur (VCO) d'un générateur de cadence (TG) comportant
- des signaux numériques de cadence (tor) d'un oscillateur de référence, qui sont formés dans un oscillateur de référence (RVCO) d'un générateur de cadence de référence (RTG), et
- selon lequel, dans le générateur de cadence de référence ou dans le générateur de cadence (RTG,TG), des signaux de cadence de référence ou des signaux de cadence (tsr, ts), à basse fréquence plus faible sont obtenus à partir des signaux de cadence (tor, to) de l'oscillateur de référence ou de l'oscillateur, à l'aide respectivement d'un dispositif de formation d'impulsions et d'un dispositif à processeur de référence et à processeur (RMP, MP), des flancs définis des signaux représentant la position de phase des signaux de cadence (tor, to) de l'oscillateur de référence ou de l'oscillateur,
- selon lequel dans le générateur de cadence (TG), à l'aide d'une boucle à verrouillage de phase formée par un dispositif (MP) de mesure de phase et de commande, les signaux de cadence (ots) de l'oscillateur sont synchronisés, du point de vue de leur phase et de leur fréquence, avec les signaux de cadence de référence (tsr), retransmis au générateur de cadence (TG),
- selon lequel, dans le générateur de cadence de référence (RTG), les écarts de phase entre les signaux de cadence de référence (tsr) et les signaux de cadence (ts), transmis au générateur de cadence de référence (RTG) par l'intermédiaire d'une ligne de jonction (VL), sont mesurés à l'aide d'un circuit de régulation formé par un dispositif (VZE2) de régulation et à retard, dans le dispositif de régulation formé par le dispositif (PME) de mesure de phase et le dispositif de commande (RMP), et des informations de régulation sont formées, a l'aide desquelles au moins un autre dispositif à retard (VZE1), qui peut être commandé avec retard et qui est inséré dans au moins une ligne de jonction (VL) servant à transmettre les signaux (tsr,ts) de cadence de référence ou de cadence, est commandé de telle sorte que les écarts de phase entre les signaux de cadence de référence (tsr) et les signaux de cadence (ts) correspondent à n fois la période des signaux de cadence (ots) de l'oscillateur de référence,
- selon lequel, dans le dispositif de régulation du générateur de cadence de référence (RTG) une information de correction (ki), qui est mesurée pendant "n" périodes et qui représente un écart de phase, mesuré dans la n-ème période entre les signaux de cadence (ts,tsr), est formée et est transmise au générateur de cadence (TG),
- selon lequel, dans le générateur de cadence (TG), les positions de phase des signaux de cadence (ts,tsr) sont corrigés à l'aide du dispositif de commande (MP) en fonction des informations de correction transmises (ki).

2. Procédé suivant la revendication 1, caractérisé par le fait que l'information de correction (ki) est transmise par modulation d'impulsions en durée ou par modulation des pauses entre impulsions des signaux de cadence de référence (tsr).

3. Procédé suivant la revendication 2, caractérisé par le fait que l'information de correction (ki) est transmise par "m" signaux de cadence de référence (tsr) codés et modulés selon une modulation d'impulsions en durée ou selon une modulation des pauses entre impulsions.

4. Procédé suivant au moins l'une des revendications précédentes, caractérisé par le fait que, dans le générateur de cadence de référence (RTG), les signaux de cadence (ots) de l'oscillateur de référence sont synchronisés, du point de vue de la phase et de la fréquence, sur des signaux de cadence du réseau, à l'aide d'une boucle à verouillage de phase de référence supplémentaire.

5. Procédé suivant au moins l'une des revendications précédentes, caractérisé par le fait que, pour la boucle à verrouillage de phase dans le générateur de cadence (TG), il est prévu une vitesse de régulation supérieure à celle prévue dans le circuit de régulation présent dans le générateur de cadence de référence (RTG).

6. Procédé suivant au moins l'une des revendications précédentes, caractérisé par le fait que, pour le circuit de régulation situé dans le générateur de cadence de référence (RTG), il est prévu une vitesse de régulation supérieure à celle prévue dans la boucle à verrouillage de phase de référence.

7. Procédé suivant au moins l'une des revendications précédentes, caractérisé par le fait que la fréquence des signaux de cadence de référence ou des signaux de cadence (tsr, ts), qui ont une fréquence inférieure à celle des signaux de cadence (ots) de l'oscillateur de référence et de l'oscillateur, est accordée sur les vitesses de régulation des boucles de verrouillage de phase et des circuits de régulation.

8. Procédé suivant au moins l'une des revendications précédentes, caractérisé par le fait que la fréquence des signaux de cadence de référence et des signaux de cadence (tsr, ts) est accordée sur une cadence de trame ou une cadence de synchronisation qui sont prévues pour un traitement et une transmission d'informations adaptés au système MIC (modulation par impulsion et codage), et qui sont standardisées.

9. Dispositif de mise en oeuvre du procédé suivant au moins l'une des revendications 1 à 8, caractérisé par le fait que, dans un générateur de cadence (TGE), la sortie d'un oscillateur numérique (VCO), qui forme les signaux de cadence (ots) de l'oscillateur et qui peut être commandé en fréquence, est reliée à une entrée de cadence d'un dispositif formant compteur (MC), que les sorties du compteur, sur lesquelles sont présents les résultats de comptage déterminés dans le dispositif formant compteur (MC), sont reliées à un premier et à un second dispositif de modulation d'impulsions en durée (PDM1, PDM2) ainsi qu'à un dispositif (PME) de mesure de la phase, que la sortie du premier dispositif de modulation d'impulsions en durée (PDM1) est reliée, par l'intermédiaire d'un dispositif passe-bas (TP), à une entrée de commande de l'oscillateur (VCO), que le second dispositif de modulation d'impulsions en durée (PDM2) a une sortie de signaux de cadence, qui fournit les signaux de cadence (ts), que le dispositif (PME) de mesure de la phase est muni d'une entrée pour les signaux de cadence (ts) arrivants, et que, dans les premier et second dispositifs de modulation d'impulsions en durée (PDM1,PDM2) et dans le dispositif (PME) de mesure de la phase, il est prévu des dispositifs à mémoire (RPD,RTF,RNF,RPF,ERG,ERF,RVZ), qui mémorisent temporairement les informations de réglage ou les informations déterminées des dispositifs et qui sont reliés à un dispositif de commande (MP), par l'intermédiaire d'une autre mémoire intermédiaire (ROM).

10. Dispositif suivant la revendication 9, caractérisé par le fait que la sortie du second dispositif de modulation d'impulsions en durée (PDM2) d'un générateur de cadence (TG) défini en tant que générateur de cadence de référence (RTG) est reliée à l'entrée du dispositif (PME) de mesure de la phase d'un autre générateur de cadence (TG), et que la sortie du second dispositif de modulation d'impulsions en durée (PDM2) de l'autre générateur de cadence (TG) est reliée à l'entrée du dispositif (PME) de mesure de la phase du générateur de cadence de référence (RTG), par l'intermédiaire d'une ligne de jonction (VL).

11. Dispositif suivant au moins l'une des revendications 9 à 10, caractérisé par le fait qu'un dispositif à retard (VZ1), dont on peut influencer le retard qu'il produit, est inséré dans l'une des deux lignes de jonction (VL) ou est inséré en étant réparti symétriquement dans les deux lignes de jonction (VE), dans le générateur de cadence de référence et/ou dans le générateur de cadence.

12. Dispositif suivant la revendication 11, caractérisé par le fait que le dispositif à retard (VZ1) est réalisé sous la forme d'une ligne à retard constituée de plusieurs portes, qui peuvent être branchées en série, de circuits intégrés, le nombre des portes devant être branchées en série étant commandé par le dispositif de commande.

13. Dispositif suivant au moins l'une des revendications 9 à 12, caractérisé par le fait que, dans le dispositif (PME) de mesure de la phase, est disposé un premier dispositif à retard (VZ1) qui est relié à l'entrée de signal de cadence de ce dispositif de mesure de la phase, qu'en vue d'influencer le retard de propagation des signaux qu'applique le dispositif à retard (VZ1), ce dernier est relié à un dispositif à mémoire intermédiaire (RVZ), qui mémorise l'information d'influence, que la sortie du premier dispositif à retard (VZE1) est reliée à l'entrée d'un second dispositif à retard (VZE2) qui sert à déterminer l'écart de phase pendant la n-ème période d'un signal de cadence (ots) de l'oscillateur, à une entrée d'un premier étage à bascule (KS1) et à une entrée (MPP1) du dispositif de commande (MP), que l'entrée de cadence du premier étage à bascule (KS1) est reliée à la sortie de l'oscillateur (VCO), que la sortie du premier étage à bascule (KS1) est reliée, par l'intermédiaire d'un circuit combinatoire (OD), à une entrée de transfert (ÜG) d'un dispositif (ERG) de mémorisation de la phase approximative, qui mémorise temporairement l'écart de phase pendant "n" période du signal de cadence de l'oscillateur, et à une entrée de transfert (UF) d'un dispositif (ERF) de mémorisation de la phase précise, qui mémorise temporairement l'écart de phase pendant la n-ème période du signal de cadence de l'oscillateur, que les sorties du second dispositif à retard (VZE2) sont reliées aux entrées du dispositif (ERF) de mémorisation de la phase précise, que les entrées du dispositif (ERG) de mémorisation de la phase approximative sont reliées aux sorties de comptage, et qu'une sortie (MPP2) du dispositif de commande (MP2) est reliée à une seconde entrée du circuit combinatoire (OD).

14. Dispositif suivant au moins l'une des revendications 9 à 13, caractérisé par le fait que dans le second dispositif de modulation d'impulsions en durée (PDM2) est disposé un comparateur positif et un comparateur négatif, dont les premières entrées sont reliées respectivement à un dispositif de mémorisation (RNF,RPF) et dont les secondes entrées sont reliées aux sorties du dispositif formant compteur (MC), que la sortie du comparateur négatif (RNF) est reliée à l'entrée de positionnement (S) d'un second étage à bascule (KS2), qui forme les signaux de cadence (ts) modulés selon une modulation d'impulsions en durée et que la sortie du comparateur positif (VP) est reliée à une entrée de remise à l'état initial (R) du second étage à bascule (KS2).

15. Dispositif suivant au moins l'une des revendications 9 à 14, caractérisé par le fait que les dispositifs à retard (VZ1,VZ2) sont formés par une ligne à retard qui est constituée de plusieurs circuit à retard branchés en série, que les circuits à retard sont constitués de transistors à effet de champ à canal n et à canal p du type à enrichissement, formés selon la technique des circuits intégrés CMOS et d'inverseurs formés à partir de ces transistors, que l'entrée des inverseurs est reliée respectivement à une borne de grille d'un transistor à effet de champ à canal n dont la borne de source est branchée à la tension d'alimentation négative, et à une borne de grille d'un transistor à effet de champ à canal p, dont la borne de drain est branchée à la tension d'alimentation positive, et la sortie des inverseurs est reliée respectivement à la borne de drain ou de source, non encore reliée, de chaque transistor à effet de champ,
- que chaque circuit à retard est formé en partie par le branchement en série de deux inverseurs et que pour influencer le temps de propagation dans ces circuits
-- un autre transistor à effet de champ à canal p est inséré entre les transistors à effet de champ à canal p et la tension d'alimentation positive de telle sorte que la borne de source de ce transistor à effet de champ à canal p est reliée à la borne de drain du transistor à effet de champ à canal p des inverseurs et que les bornes de drain sont branchées à la tension d'alimentation,
-- ou un transistor à effet de champ à canal n est inséré entre les transistors à effet de champ à canal n et la tension d'alimentation négative de telle sorte que la borne de drain de ces transistors à effet de champ à canal n est reliée respectivement à la borne de source du transistor à effet de champ à canal n des inverseurs, que les bornes de source sont branchées à la tension d'alimentation négative, et que les bornes de grille sont reliées aussi bien entre elles dans un circuit à retard qu'à toutes les bornes de grille de chacun des autres circuits à retard, et
que les circuits à retard sont réalisés dans un circuit intégré et que l'entrée et la sortie de la ligne à retard et les liaisons entre les éléments de la ligne à retard sont reliées respectivement à une borne prévue pour un raccordement extérieur.

16. Dispositif suivant la revendication 15, caractérisé par le fait qu'un circuit comparateur de phase est branché en aval de la ligne à retard, que le circuit comparateur de phase est formé en partie par deux inverseurs montés en série et que, dans le second circuit inverseur, deux autres transistors à effet de champ à canal n ou p sont insérés en série dans la direction drain-source ou source-drain, respectivement entre la tension d'alimentation et les transistors à effet de champ à canal n ou p, que les bornes de grille des transistors à effet de champ situés en aval du transistor à effet de champ respectif à canal n ou p du second circuit inverseur sont reliées à l'entrée de l'inverseur et que les bornes de grille des transistors à effet de champ reliées à la tension d'alimentation sont reliées entre elles et à la sortie de la ligne à retard, qu'un condensateur peut être inséré entre la sortie, qui représente la sortie du circuit comparateur de phase, du second circuit inverseur et la tension d'alimentation négative et que la sortie du circuit comparateur de phase est reliée directement à toutes les bornes de grille, qui sont reliées entre elles, des circuits à retard et à une borne prévue pour un raccordement extérieur.
